(19) Europäisches Patentamt
European Patent Office
Office européen des brevets

(11) **EP 2 079 179 B1**

(12) **FASCICULE DE BREVET EUROPEEN**

(45) Date de publication et mention de la délivrance du brevet:
**12.11.2014 Bulletin 2014/46**

(51) Int Cl.:
***H04J 14/02*** *(2006.01)*

(21) Numéro de dépôt: **08170415.7**

(22) Date de dépôt: **02.12.2008**

(54) **Détermination de la performance de transmission d'un chemin optique dans un réseau de télécommunication**

Bestimmung der Übertragungsleistung eines optischen Weges in einem Funknetz

Determination of the transmission performance of an optical path in a telecommunications network

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **08.01.2008 FR 0850076**

(43) Date de publication de la demande:
**15.07.2009 Bulletin 2009/29**

(73) Titulaire: **ALCATEL LUCENT**
**92100 Boulogne-Billancourt (FR)**

(72) Inventeurs:
• **Charlet, Gabriel**
**78140 Velizy (FR)**

• **Antona, Jean-Christophe**
**78140 Velizy (FR)**
• **Peloso, Pierre**
**78140 Velizy (FR)**

(74) Mandataire: **Sciaux, Edmond et al**
**Alcatel-Lucent International**
**148/152 route de la Reine**
**92100 Boulogne-Billancourt (FR)**

(56) Documents cités:
**EP-A- 1 278 324          EP-A- 1 548 966**
**US-A1- 2004 052 526**

**Description**

La présente invention concerne la détermination de la performance de transmission d'un chemin optique dans un réseau de télécommunication.

L'invention se situe dans le domaine des réseaux de transmission optique et plus précisément des réseaux dits "transparents" utilisant le multiplexage en longueur d'onde. Il est rappelé que les réseaux optiques sont essentiellement constitués de noeuds reliés entre eux par des liens optiques. Un noeud est souvent relié à plusieurs autres noeuds et intègre des fonctions de routage pour aiguiller sélectivement les signaux reçus de liens entrants vers d'autres liens sortants en fonction des destinations respectives des signaux. Dans les réseaux mettant en oeuvre le multiplexage en longueur d'onde, habituellement désigné par WDM (de l'anglais "Wavelength Division Multiplexing"), les signaux véhiculés dans les liens sont des signaux multiplex constitués de plusieurs canaux portés respectivement par des fréquences optiques distinctes. Dans les réseaux WDM, les noeuds peuvent être équipés de régénérateurs optoélectroniques agissant séparément sur chaque canal des multiplex WDM reçus pour effectuer une régénération du signal.

Le réseau qui est alors dit "opaque" présente l'avantage de pouvoir assurer une qualité minimale de transmission fixée pour tous les liens susceptibles d'être suivis. En contrepartie, la présence des régénérateurs a une incidence sur le coût du réseau qui est d'autant plus importante que le nombre de canaux WDM est élevé.

Une autre solution moins coûteuse consiste à concevoir un réseau démuni de dispositifs de régénération individuelle des canaux. Un tel réseau est alors dit "transparent".

Un compromis peut aussi consister à réaliser un réseau "hybride" où seulement certains noeuds ou liens sont munis de régénérateurs, ou bien encore où des noeuds sont munis de quelques régénérateurs qui ne sont utilisés sélectivement qu'en cas de besoin.

L'invention s'applique aux chemins optiques dans les réseaux transparents ou hybrides. On appelle ici chemin optique un chemin passant par un ou plusieurs liens et un ou plusieurs noeuds du réseau et permettant de transporter un signal optique sans conversion dans le domaine électrique.

Dans un tel réseau de transmission ou de télécommunication, il est difficile de déterminer la performance des différents chemins optiques. Ceci est dû notamment à un nombre important de paramètres inconnus. Particulièrement dans le cas de réseaux optiques hybrides, une détermination ou une prédiction précise est importante afin de déterminer s'il convient de procéder à une régénération du signal. Ainsi, il est essentiel d'être capable de déterminer avec précision la performance de transmission d'un chemin optique avant d'établir une liaison afin d'être sûr d'obtenir une liaison fonctionnelle.

Il est connu à ce jour une première famille de méthodes consistant à provisionner des marges de transmission. Ainsi, un réseau est conçu en fonction de règles déterminant pour chaque chemin optique une étendue de pertes, une carte de dispersion,...

Il est encore connu, une seconde famille de méthodes dites paramétriques estimant la performance de transmission d'un chemin optique en fonction des grandeurs physiques du chemin optique (en se basant sur les caractéristiques des liens le constituant) et/ou du signal transmis : distance, fréquence, ... Ainsi FR 2864386 présente un exemple d'une telle méthode paramétrique déterminant une qualité de transmission pour un chemin optique en fonction des paramètres : rapport signal à bruit optique (en anglais : Optical Signal to Noise Ratio, ou OSNR), dispersion de polarisation (en anglais : Polarization Mode Dispersion, ou PMD), dispersion chromatique (en anglais : Group Velocity Dispersion, ou GVD), phase non linéaire (pNL), considérés comme représentatifs des caractéristiques de transmission du chemin optique.

Ces deux premières familles présentent toutes deux l'inconvénient d'être très pessimistes. De plus, la méthode des marges somme souvent les « dB » pour les pénalités, ce qui n'est pas vraiment exact.

Une troisième famille de méthodes envisageables consiste à procéder avant l'exploitation du réseau à des mesures systématiques pour déterminer la qualité de transmission de tous les itinéraires/chemins optiques possibles. Toutefois, cette solution n'est praticable que pour des réseaux de dimension relativement modeste. De plus, la qualité de transmission d'un signal optique est dépendante aussi de sa longueur d'onde porteuse, les mesures doivent être effectuées pour plusieurs longueurs d'onde. Ainsi, par exemple, pour un réseau de taille continentale, comportant plusieurs dizaines de noeuds utilisant plusieurs dizaines de longueurs d'onde, le nombre de mesures peut atteindre plusieurs dizaines de milliers. Par exemple, un réseau transparent comportant 30 noeuds avec 100 liens directs entre noeuds et prévu pour 100 longueurs d'onde nécessiterait environ 1 million de mesures. Un nombre aussi important de mesures est coûteux et de plus retarde la mise en service du réseau. Une telle approche ne peut être retenue dans la pratique.

Une méthode estimative, permettant de déterminer une performance de transmission, sans nécessairement la mesurer, à partir d'éléments de performance connus, pour un chemin optique d'un réseau est utile tant pour des applications de mise en oeuvre d'un réseau, avant qu'une transmission n'ait été réalisée sur ledit chemin optique, que pour des applications de maintenance surveillant l'évolution dans le temps de la performance de transmission d'un réseau en fonctionnement.

La présente invention remédie à certains de ces différents inconvénients.

L'invention a pour objet un procédé de détermination de la performance de transmission d'un chemin optique dans un réseau de télécommunication comprenant les étapes suivantes :

- estimation initiale d'un premier ensemble de paramètres comprenant au moins un paramètre caractéristique de la performance de transmission pour un premier chemin optique et pour un second chemin optique, le second chemin optique contenant le premier chemin optique,
- mesure réelle d'un paramètre caractéristique de la performance de transmission du premier chemin optique,
- extrapolation au second chemin optique, en déterminant une nouvelle estimation d'un second ensemble de paramètres comprenant au moins un paramètre caractéristique de la performance de transmission pour le second chemin optique, fonction de l'estimation initiale et de la mesure réelle.

Selon une autre caractéristique de l'invention, le premier et le second ensembles de paramètres caractéristiques comprennent une performance de transmission et l'étape d'estimation comprend l'estimation d'une performance initiale des premier et second chemins optique, l'étape de mesure comprend la mesure d'une performance réelle du premier chemin optique, l'étape d'extrapolation comprend une détermination d'une nouvelle estimation de performance, selon les formules

$$Q'_{e2} = Q_{m1} + \Delta' \; et \; \Delta' = F \; (\Delta)$$

et

$$\Delta = Q_{e2} - Q_{e1}$$

avec

$Q'_{e2}$: nouvelle estimation de performance du second chemin optique,
$Q_{e1}$: estimation initiale de performance du premier chemin optique,
$Q_{e2}$: estimation initiale de performance du second chemin optique,
$Q_{m1}$: mesure de performance du premier chemin optique,
$F(\Delta)$: fonction de la variable $\Delta$.

Selon une autre caractéristique de l'invention, le premier ensemble de paramètres caractéristiques comprend une performance de transmission minimale et une performance de transmission maximale, le second ensemble de paramètres caractéristiques comprend une performance de transmission et, l'étape d'estimation comprend l'estimation d'une performance initiale minimale et d'une performance initiale maximale des premier et second chemins optiques, l'étape de mesure comprend la mesure d'une performance réelle du premier chemin optique, l'étape d'extrapolation comprend une détermination d'une nouvelle estimation de performance, selon les formules

$$Q'_{e2} = Q_{e2min} + (Q_{m1} - Q_{e1min}) * (Q_{e2max} - Q_{e2min}) / (Q_{e1max} - Q_{e1min}) - alpha(x)$$

avec

$Q_{e1min}$: estimation initiale minimale de performance du premier chemin optique,
$Q_{e1max}$: estimation initiale maximale de performance du premier chemin optique,
$Q_{e2min}$: estimation initiale minimale de performance du second chemin optique,
$Q_{e2max}$: estimation initiale maximale de performance du second chemin optique,
$Q'_{e2}$: nouvelle estimation de performance du second chemin optique,
$Q_{m1}$: mesure de performance du premier chemin optique,
alpha fonction de la variable x,
x variable représentant la surlongueur du second chemin optique ($L_2$) par rapport au premier chemin optique ($L_1$), et/ou le nombre de span du ou des liens additionnels, et/ou le rapport phase non linéaire à signal à bruit optique, pNL/OSNR, du ou des liens additionnels.

Selon une autre caractéristique de l'invention, le premier et le second ensembles de paramètres caractéristiques comprennent une performance de transmission minimale et une performance de transmission maximale et l'étape d'estimation comprend l'estimation d'une performance initiale minimale et d'une performance initiale maximale des premier et second chemins optiques, l'étape de mesure comprend la mesure d'une performance réelle du premier chemin optique, l'étape d'extrapolation comprend une détermination d'une nouvelle estimation de performance minimale et d'une nouvelle estimation de performance maximale, selon les formules :

$$Q'_{e2min} = Q_{m1} + \Delta_{min}', \quad \Delta_{min}' = F(\Delta_{min}) \quad Q'_{e2max} = Q_{m1} + \Delta_{max}', \quad \Delta_{max}' = F(\Delta_{max})$$

$$\Delta_{min} = \min(Q_{e2min} - Q_{e1min}; Q_{e2max} - Q_{e1max})$$

$$\Delta_{max} = \max(Q_{e2min} - Q_{e1min}; Q_{e2max} - Q_{e1max})$$

avec

$Q_{e1min}$: estimation initiale minimale de performance du premier chemin optique,
$Q_{e1max}$: estimation initiale maximale de performance du premier chemin optique,
$Q_{e2min}$: estimation initiale minimale de performance du second chemin optique,
$Q_{e2max}$: estimation initiale maximale de performance du second chemin optique,
$Q'_{e2min}$: nouvelle estimation de performance minimale du second chemin optique,
$Q'_{e2max}$: nouvelle estimation de performance maximale du second chemin optique,
$Q_{m1}$: mesure de performance du premier chemin optique,
$F(\Delta)$: fonction de la variable $\Delta$.

Selon une autre caractéristique de l'invention, l'étape d'extrapolation comprend encore une détermination d'une nouvelle estimation de performance, selon les formules :

$$Q'_{e2} = Q'_{e2min} + (Q_{m1} - Q_{e1min}) * (Q'_{e2max} - Q'_{e2min}) / (Q_{e1max} - Q_{e1min}) - alpha(x)$$

avec

$Q_{e1min}$: estimation initiale minimale de performance du premier chemin optique,
$Q_{e1max}$: estimation initiale maximale de performance du premier chemin optique,
$Q'_{e2min}$: nouvelle estimation minimale de performance du second chemin optique,
$Q'_{e2max}$: nouvelle estimation maximale de performance du second chemin optique,
$Q'_{e2}$: nouvelle estimation de performance du second chemin optique,
$Q_{m1}$: mesure de performance du premier chemin optique,
alpha fonction de la variable x,
x variable représentant la surlongueur du second chemin optique ($L_2$) par rapport au premier chemin optique ($L_1$), et/ou le nombre de span du ou des liens additionnels, et/ou le rapport phase non linéaire à signal à bruit optique, pNL/OSNR, du ou des liens additionnels.

Selon une autre caractéristique de l'invention, la fonction $F(\Delta)$ est la fonction identité relativement à la variable $\Delta$.
Selon une autre caractéristique de l'invention, la fonction $F(\Delta, x)$ est encore fonction de la ou des variable(s) x, x étant la surlongueur du second chemin optique par rapport au premier chemin optique, et/ou x étant le nombre de span du ou des liens additionnels, et/ou x étant le rapport phase non linéaire à signal à bruit optique, pNL/OSNR, du ou des liens additionnels.

**EP 2 079 179 B1**

Selon une autre caractéristique de l'invention, la fonction F(Δ, x) est une fonction croissante de la variable x.

Selon une autre caractéristique de l'invention, la fonction F(Δ, x) est la fonction identité relativement à la variable x.

Selon une autre caractéristique de l'invention, la fonction F(Δ, x) est une fonction linéaire de la variable x.

Selon une autre caractéristique de l'invention, la fonction F(Δ, x) est une fonction quadratique de la variable x.

Selon une autre caractéristique de l'invention, la fonction alpha (x) est une fonction croissante de la variable x. Il est également possible que cette fonction dépende d'autres variables, par exemple les caractéristiques des spans traversés, telles que la dispersion chromatique et l'incertitude associée à cette valeur.

Selon une autre caractéristique de l'invention, la fonction alpha(x) est la fonction nulle.

Le procédé selon l'invention présente l'avantage de permettre, par extrapolation, une mise à jour d'estimations de performances généralement pessimistes, sans recourir à des mesures systématiques coûteuses.

D'autres caractéristiques, détails et avantages de l'invention ressortiront plus clairement de la description détaillée donnée ci-après à titre indicatif en relation avec des dessins sur lesquels :

- la figure 1 représente un exemple de réseau,
- la figure 2 illustre un premier mode de réalisation de l'invention,
- la figure 3 illustre un second mode de réalisation de l'invention,
- la figure 4 illustre un troisième mode de réalisation de l'invention.

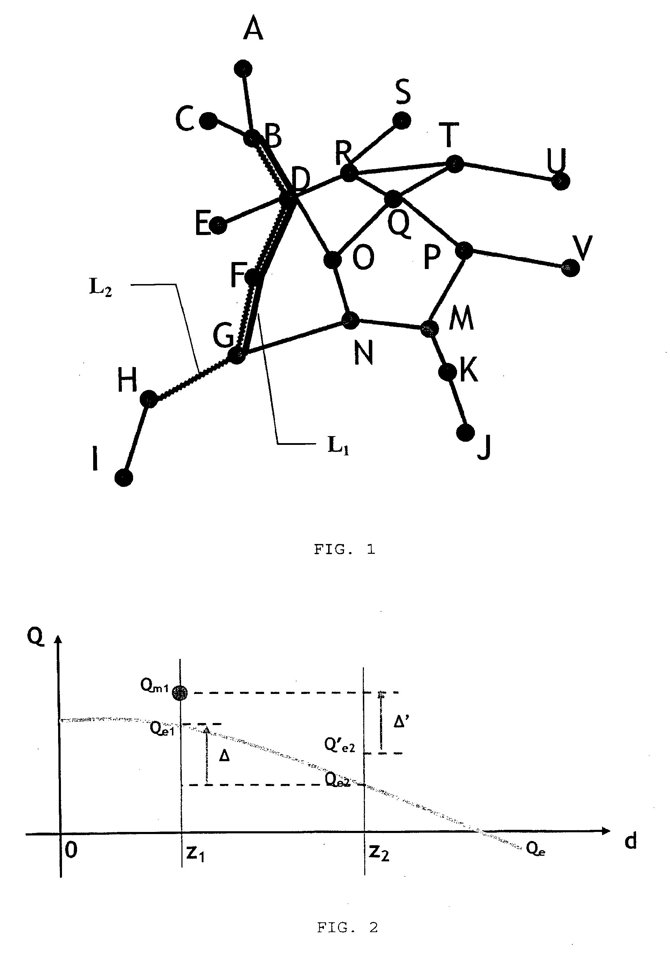

La figure 1 présente un exemple typique de réseau. Ce réseau comprend des noeuds A-V reliés par des liens. A titre illustratif le chemin optique $L_1$ relie le noeud B au noeud G en passant par les noeuds D et F. Le chemin optique $L_2$ relie le noeud B au noeud H en passant par les noeuds D, F et G. Le chemin optique $L_2$ contient en totalité le chemin optique $L_1$, prolongé du lien GH. Le chemin optique $L_1$ est ainsi contenu dans le chemin optique $L_2$. Il est ainsi possible de définir une surlongueur du chemin optique $L_2$ par rapport au chemin optique $L_1$, égale à la longueur cumulée du ou des liens additionnels, ici la surlongueur est égale à la longueur du lien additionnel GH.

Un lien et plus généralement tout segment est constitué de longueurs de fibres optiques d'un seul tenant ou spans. La propagation dans la fibre optique perturbe le signal, notamment à cause des non-linéarités et de la dispersion chromatique Les spans sont reliés entre eux par des dispositifs tels que des amplificateurs optiques pour amplifier le signal et ainsi compenser les pertes et des modules de fibres compensant la dispersion chromatique. Le nombre de spans constitutifs d'un segment/lien est un paramètre important de la perte de performance de transmission.

Un chemin optique existe qui peut être défini entre deux points A-V quelconques du réseau. Dans le cas de réseaux optiques les liens sont monodirectionnels. Un chemin optique XY est donc différent d'un chemin optique YX. A chaque chemin optique est associée une performance de transmission Q. Cette performance est utilisée pour déterminer la faisabilité d'une transmission. Chaque signal à transmettre doit bénéficier d'une performance Q minimale de transmission prédéfinie.

La performance Q est un indicateur de la qualité d'un chemin optique relativement à la transmission. Tout indicateur Q de qualité de transmission, permettant une comparaison peut être utilisé. Ainsi classiquement le facteur $Q^2$(dB) défini à partir de la formule BER=1/2 erfc(Q/sqrt(2)), avec BER le taux d'erreur binaire (de l'anglais Bit Error Rate). Cette performance est mesurée en pratique en fonction d'un taux d'erreur binaire présenté par le signal reçu après transmission. A fin d'illustration et pour simplifier l'exposé, la performance Q de transmission est considérée être, une valeur variant entre 0 et 1, la valeur 1 correspondant à une transmission parfaite.

On note Q cette performance de transmission. Elle peut être assortie de divers indices :

|     |                                    |
|-----|------------------------------------|
| 1   | pour le chemin optique $L_1$,      |
| 2   | pour le chemin optique $L_2$,      |
| min | pour une valeur minimale,          |
| max | pour une valeur maximale           |
| e   | pour une valeur estimée,           |
| m   | pour une valeur mesurée.           |

Le symbole ' (prime) dénote une performance nouvelle estimée déterminée par le procédé, par opposition à une performance initiale. Ces différents indices peuvent se combiner entre eux. Ainsi par exemple $Q'_{e2max}$ est la nouvelle estimée de la valeur maximale de la performance de transmission pour le chemin optique $L_2$.

Dans un réseau transparent/hybride, la dégradation subie par un signal en cours de sa transmission dépend d'abord du chemin optique/itinéraire qu'il a suivi. Lors de la mise en route d'un tel réseau, il importe de déterminer à l'avance, une performance de transmission Q (ou une grandeur représentative de cette performance de transmission) prévisible pour chaque chemin optique/itinéraire possible dans le réseau, avant d'établir une communication sur ledit

5

chemin optique, afin de déterminer si une régénération du signal est nécessaire ou non. Une détermination de la performance Q permet de trancher. Ainsi il peut être décidé que pour une valeur de Q supérieure à un certain seuil, par exemple 0,5 si Q varie entre 0 et 1, une communication peut être établie sans régénération. A contrario une valeur de Q inférieure à ce même seuil nécessitera une régénération.

Une autre application selon un mode de réalisation de l'invention est l'utilisation du procédé selon l'invention pour surveiller un réseau en fonctionnement dans le temps. L'extrapolation est alors utilisée pour mettre à jour les performances de transmissions des chemins optique du réseau, en limitant le recours systématique à des mesures. Une telle surveillance permet de surveiller le vieillissement du réseau et de détecter lorsqu'un chemin optique n'est plus en mesure d'assurer une transmission et que le signal doit être régénéré.

Le principe du procédé objet de l'invention est l'amélioration de la précision d'une estimation initiale d'un premier ensemble de paramètres caractéristiques de la performance de transmission, en fonction de mesures de performance de transmission effectuées pour certains chemins optiques, par extrapolation.

Selon l'invention, le procédé comprend trois étapes. Dans une première étape d'estimation, il est déterminé une estimation initiale d'un premier ensemble de paramètres comprenant au moins un paramètre caractéristique de la performance de transmission pour un premier chemin optique $L_1$ et pour un second chemin optique $L_2$. Cette estimation peut être réalisée par toute méthode, par exemple par l'une des méthodes de l'art antérieur de la première famille (méthode des marges) ou de la deuxième famille (méthode paramétrique). Comme vu précédemment, ces méthodes sont généralement très pessimistes et conduisent à des valeurs de performance de transmission faibles. En se basant uniquement sur ce type de performance estimée, il serait déterminé un nombre de régénérateurs trop important relativement au besoin réel.

Une mesure de la performance réelle de transmission d'un chemin optique fait apparaître une performance « améliorée » généralement meilleure que l'estimée. Cependant il a été vu précédemment qu'il est impensable dans la pratique de procéder à une mesure de performance pour tous les chemins optiques. Une idée essentielle de l'invention est de procéder à des mesures de performance pour certains chemins optiques, améliorant au passage la performance de ces chemins optiques, et d'extrapoler ensuite cette « amélioration » aux chemins optiques contenants lesdits chemins optiques.

Dans une seconde étape de mesure, le procédé mesure une performance de transmission pour le premier chemin optique $L_1$.

Pour tout second chemin optique $L_2$ contenant le premier chemin optique $L_1$, il est alors possible, dans une troisième étape, d'extrapoler l'amélioration obtenue par la mesure pour le premier chemin optique $L_1$, aux chemins optiques contenants $L_1$. L'extrapolation s'effectue en déterminant une nouvelle estimation d'un second ensemble de paramètres comprenant au moins un paramètre caractéristique de la performance de transmission pour un chemin optique $L_2$, fonction de l'estimation initiale du premier ensemble comprenant au moins un paramètre caractéristique de la performance de transmission pour le premier chemin optique $L_1$ et pour le second chemin optique $L_2$ contenant $L_1$, issue de la première étape et fonction de la mesure réelle effectuée à la seconde étape.

Cette extrapolation peut s'effectuer selon plusieurs modes de réalisation.

En se référant à la figure 2 un premier mode de réalisation est illustré. La figure 2 présente une courbe comprenant la distance d ou longueur des chemins optiques du réseau en abscisse et la performance de transmission Q en ordonnée. Le premier et le second ensembles de paramètres caractéristiques comprennent la performance de transmission Q. Durant la première étape d'estimation, il est procédé à l'estimation d'une performance initiale $Q_{e1}$ pour le premier chemin optique $L_1$ de longueur $Z_1$, et d'une performance initiale $Q_{e2}$ pour le second chemin optique $L_2$ de longueur $Z_2$. La seconde étape procède à la mesure d'une performance réelle $Q_{m1}$ du premier chemin optique $L_1$. Cette mesure $Q_{m1}$ est généralement meilleure que la performance estimée $Q_{e1}$ du chemin optique $L_1$ et fournit une nouvelle estimée $Q'_{e1}$ de cette performance. L'extrapolation au chemin optique L2 s'effectue en déterminant une nouvelle estimation de performance $Q'_{e2}$, en remplaçant l'estimation initiale $Q_{e2}$ par la mesure $Q_{m1}$ augmentée de la différence $\Delta$ entre la performance initiale $Q_{e2}$ du chemin optique $L_2$ et la performance initiale $Q_{e1}$ du chemin optique $L_1$, ou plus généralement de $\Delta'$, transformés de $\Delta$ par une fonction F. Lorsque $\Delta = \Delta'$, le premier mode de réalisation reporte directement et intégralement l'amélioration mesurée $Q_{m1} - Q_{e1}$ sur le premier chemin optique $L_1$ au second chemin optique $L_2$.

Le premier mode de réalisation considère un unique paramètre Q de performance pour un chemin optique. Ce paramètre Q est alors une performance probable, moyenne $Q_{moy}$ ou encore une performance au pire cas, afin de permettre de décider et pouvoir garantir que le signal pourra être transmis dans de bonnes conditions. Cependant pour certaines applications, il est préférable d'encadrer la performance. Ceci peut permettre de déterminer une nouvelle performance estimée au prorata de la performance mesurée.

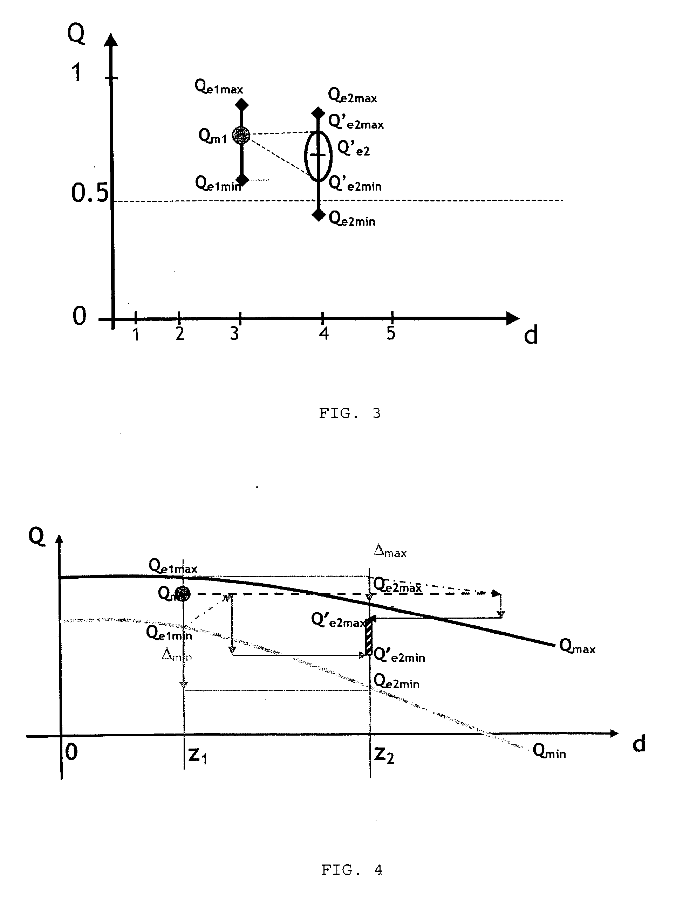

Selon un second mode de réalisation, illustré par la figure 3, le premier ensemble de paramètres caractéristiques comprend une performance de transmission minimale et une performance de transmission maximale, et le second ensemble de paramètres caractéristiques comprend une performance de transmission. L'étape d'estimation comprend l'estimation d'une performance initiale minimale $Q_{e1min}$ et d'une performance initiale maximale $Q_{e1max}$ pour le premier chemin optique $L_1$, d'une performance initiale minimale $Q_{e2min}$ et d'une performance initiale maximale $Q_{e2max}$ pour le

second chemin optique $L_2$. Une telle estimation peut de même être réalisée par les méthodes de l'art antérieur en tenant compte du pire cas ou d'options défavorables pour les valeurs minimales et en tenant compte du meilleur cas ou d'options favorables pour les valeurs maximales. La seconde étape procède à la mesure d'une performance réelle $Q_{m1}$ du premier chemin optique $L_1$. Cette valeur mesurée $Q_{m1}$, qui est généralement meilleure que la performance estimée $Q_{e1}$, peut constituer une nouvelle estimée $Q'_{e1}$, et selon toute vraisemblance, se situe à l'intérieur de l'intervalle $[Q_{e1min}, Q_{e1max}]$. L'hypothèse qui préside à ce second mode de réalisation est que la nouvelle estimée de performance $Q'_{e2}$ du chemin optique $L_2$, se situe dans une même proportion entre les bornes de l'intervalle $[Q_{e2min}, Q_{e2max}]$ que la performance mesurée $Q_{m1}$ ($Q'_{e1}$) relativement aux bornes de l'intervalle $[Q_{e1min}, Q_{e1max}]$. Une proportion est alors calculée selon la formule :

$$\frac{Q'_{e2} - Q_{e2min}}{Q_{e2max} - Q_{e2min}} = \frac{Q'_{e1} - Q_{e1min}}{Q_{e1max} - Q_{e1min}},$$

ou encore

$$Q'_{e2} = Q_{e2min} + (Q_{m1} - Q_{e1min}) * (Q_{e2max} - Q_{e2min}) / (Q_{e1max} - Q_{e1min})$$

Une variante consiste à ajouter une marge de sécurité alpha (x) selon la formule $Q'_{e2} = Q_{e2min} + (Q_{m1} - Q_{e1min})* (Q_{e2max} - Q_{e2min}) / (Q_{e1max} - Q_{e1min})$ - alpha (x), où alpha est une fonction de la ou des variable(s) x, x variable représentant la surlongueur du second chemin optique ($L_2$) par rapport au premier chemin optique ($L_1$), et/ou le nombre de span du ou des liens additionnels, et/ou le rapport phase non linéaire à signal à bruit optique, pNL/OSNR, du ou des liens additionnels.

Pour certaines applications, il est préférable d'encadrer la performance. Ceci peut permettre d'extrapoler un intervalle plutôt qu'une valeur unique.

Selon un troisième mode de réalisation, illustré par la figure 4, 1 premier et le second ensembles de paramètres caractéristiques comprennent une performance de transmission minimale et une performance de transmission maximale. L'étape d'estimation comprend l'estimation d'une performance initiale minimale $Q_{e1min}$ et d'une performance initiale maximale $Q_{e1max}$ pour le premier chemin optique $L_1$, d'une performance initiale minimale $Q_{e2min}$ et d'une performance initial maximale $Q_{e2max}$ pour le second chemin optique $L_2$. La seconde étape procède à la mesure d'une performance réelle $Q_{m1}$ du premier chemin optique $L_1$. L'étape d'extrapolation comprend une détermination d'une nouvelle estimation de performance minimale $Q'_{e2min}$ et d'une nouvelle estimation de performance maximale $Q'_{e2max}$. Le principe de ce troisième mode de réalisation, à l'instar du premier mode de réalisation, consiste à déterminer une nouvelle estimation de performance $Q'_{e2min}$, respectivement $Q'_{e2max}$, en remplaçant l'estimation initiale $Q_{e2min}$, respectivement $Q_{e2max}$, par la mesure $Q_{m1}$ augmentée de la différence $\Delta_{min}$, respectivement $\Delta_{max}$, entre la performance initiale minimale, respectivement maximale, du chemin optique $L_2$ et la performance initiale minimale, respectivement maximale, du chemin optique $L_1$, ou plus généralement de $\Delta'_{min}$, respectivement $\Delta'_{max}$, transformée de $\Delta_{min}$, respectivement $\Delta_{max}$, par une fonction F. Exprimé mathématiquement, ceci revient à appliquer les formules :

$$Q'_{e2min} = Q_{m1} + \Delta_{min}', \quad \Delta_{min}' = F(\Delta_{min}) \quad Q'_{e2max} = Q_{m1} + \Delta_{max}', \quad \Delta_{max}'$$
$$= F(\Delta_{max})$$

$$\Delta_{min} = min (Q_{e2min} - Q_{e1min}; Q_{e2max} - Q_{e1max})$$

$$\Delta_{min} = max (Q_{e2min} - Q_{e1min}; Q_{e2max} - Q_{e1max})$$

où F est une fonction $F(\Delta)$ de la variable $\Delta$. Les fonctions min et max sont ici introduites afin de garantir que $Q'_{e2min}$ soit bien inférieur à $Q'_{e2max}$.

L'obtention d'un intervalle $[Q'_{e2min}, Q'_{e2max}]$ encadrant la nouvelle estimation peut, pour certaines applications, être une information plus utile ou plus pratique. Pour certaines applications il est nécessaire de disposer d'une valeur unique de l'estimée. La combinaison des deux approches fournit une valeur estimée assortie d'un intervalle qui est alors indicatif de la précision avec laquelle cette estimée est connue. Pour cela toute méthode connue peut être appliquée.

Il est encore possible en combinant avec le second mode de réalisation, encore illustré à la figure 3, de déterminer une performance estimée au prorata de la position de la mesure. Ainsi il est possible d'appliquer le principe du second mode de réalisation en remplaçant les bornes de l'intervalle estimé initial ($Q_{e2min}$, $Q_{e2max}$) par les bornes de l'intervalle estimé ($Q'_{e2min}$, $Q'_{e2max}$) selon le troisième mode de réalisation. Ceci revient à appliquer la formule de proportion

$$\frac{Q'_{e2} - Q'_{e2min}}{Q'_{e2max} - Q'_{e2min}} = \frac{Q'_{e1} - Q_{e1min}}{Q_{e1max} - Q_{e1min}}$$

ou encore :

$$Q'_{e2} = Q'_{e2min} + (Q_{m1} - Q_{e1min}) * (Q'_{e2max} - Q'_{e2min}) / (Q_{e1max} - Q_{e1min}).$$

Ici encore, une variante consiste à ajouter une marge de sécurité alpha(x) selon la formule $Q'_{e2} = Q'_{e2min}$ + ($Q_{m1}$ - $Q_{e1min}$)* ($Q'_{e2max}$ - $Q'_{e2min}$)/ ($Q_{e1max}$ - $Q_{e1min}$) - alpha (x).

Ces modes de réalisation ne constituent que des exemples, et l'homme du métier est à même de combiner les modes de réalisation exposés ou de développer d'autres modes de réalisation extrapolant la connaissance améliorée obtenue par une mesure pour un chemin optique, aux estimées des chemins optiques contenants ledit chemin optique, conformément au principe général.

Il est encore possible de varier le procédé en utilisant une fonction F dans les premier et troisième modes de réalisation. Cette fonction F peut ainsi être la fonction identité relativement à la variable $\Delta$.

On connaît, par exemple par les méthodes paramétriques, l'évolution de la (dégradation de) performance en fonction de la longueur d'un chemin optique. La fonction F est alors avantageusement encore une fonction $F(\Delta, x)$ d'au moins une variable x indicative du des caractéristiques du ou des liens additionnels du second chemin optique $L_2$ par rapport au premier chemin optique $L_1$. La variable x peut être la surlongueur du second chemin optique par rapport au premier chemin optique, et/ou le nombre de span du ou des liens additionnels, et/ou le rapport phase non linéaire à signal à bruit optique, pNL/OSNR, du ou des liens additionnels.

La performance se dégradant généralement avec la longueur Z d'un chemin optique, la fonction $F(\Delta, x)$ est une fonction croissante de la variable x. De même la fonction alpha(x) est une fonction croissante de la variable x.

La fonction $F(\Delta, x)$ peut être la fonction identité relativement à la variable x. La fonction $F(\Delta, x)$ peut être une fonction linéaire de la variable x. La fonction $F(\Delta, x)$ peut être une fonction quadratique de la variable x. La fonction alpha(x) peut être la fonction nulle.

## Revendications

1. Procédé de détermination de la performance de transmission d'un chemin optique dans un réseau de télécommunication comprenant les étapes suivantes :

   - estimation initiale d'un premier ensemble de paramètres comprenant au moins un paramètre caractéristique de la performance de transmission pour un premier chemin optique ($L_1$) et pour un second chemin optique ($L_2$), le second chemin optique ($L_2$) contenant le premier chemin optique ($L_1$),
   - mesure réelle d'un paramètre caractéristique de la performance de transmission du premier chemin optique ($L_1$), **caractérisé en ce qu'**il comprend encore une étape de:
   - extrapolation au second chemin optique ($L_2$), en déterminant une nouvelle estimation d'un second ensemble de paramètres comprenant au moins un paramètre caractéristique de la performance de transmission pour le second chemin optique ($L_2$), fonction de l'estimation initiale et de la mesure réelle.

2. Procédé selon la revendication 1 où le premier et le second ensembles de paramètres caractéristiques comprennent une performance de transmission et où,

   - l'étape d'estimation comprend l'estimation d'une performance initiale ($Q_{e1}$, $Q_{e2}$) des premier et second chemins optiques ($L_1$, $L_2$),

- l'étape de mesure comprend la mesure d'une performance réelle ($Q_{m1}$) du premier chemin optique ($L_1$) ,
- l'étape d'extrapolation comprend une détermination d'une nouvelle estimation de performance ($Q'_{e2}$), selon les formules :

$$Q'_{e2} = Q_{m1} + \Delta' \text{ et } \Delta' = F(\Delta) \text{ et } \Delta = Q_{e2} - Q_{e1}$$

avec

$Q'_{e2}$: nouvelle estimation de performance du second chemin optique,
$Q_{e1}$: estimation initiale de performance du premier chemin optique,
$Q_{e2}$: estimation initiale de performance du second chemin optique,
$Q_{m1}$: mesure de performance du premier chemin optique, $F(\Delta)$: fonction de la variable $\Delta$.

3. Procédé selon la revendication 1 où le premier ensemble de paramètres caractéristiques comprend une performance de transmission minimale et une performance de transmission maximale, le second ensemble de paramètres caractéristiques comprend une performance de transmission et où,

- l'étape d'estimation comprend l'estimation d'une performance initiale minimale ($Q_{e1min}$, Qe2min) et d'une performance initiale maximale ($Q_{e1max}$, $Q_{e2max}$) des premier et second chemins optiques ($L_1$, $L_2$),
- l'étape de mesure comprend la mesure d'une performance réelle ($Q_{m1}$) du premier chemin optique ($L_1$),
- l'étape d'extrapolation comprend une détermination d'une nouvelle estimation de performance ($Q'_{e2}$), selon les formules :

$$Q'_{e2} = Q_{e2min} + (Q_{m1} - Q_{e1min}) * (Q_{e2max} - Q_{e2min}) / (Q_{e1max} - Q_{e1min}) - alpha(x)$$

avec

$Q_{e1min}$: estimation initiale minimale de performance du premier chemin optique,
$Q_{e1max}$: estimation initiale maximale de performance du premier chemin optique,
$Q_{e2min}$: estimation initiale minimale de performance du second chemin optique,
$Q_{e2max}$: estimation initiale maximale de performance du second chemin optique,
$Q'_{e2}$: nouvelle estimation de performance du second chemin optique,
$Q_{m1}$: mesure de performance du premier chemin optique alpha fonction de la variable x,
x variable représentant la surlongueur du second chemin optique ($L_2$) par rapport au premier chemin optique ($L_1$), et/ou le nombre de span du ou des liens additionnels, et/ou le rapport phase non linéaire à signal à bruit optique, pNL/OSNR, du ou des liens additionnels.

4. Procédé selon la revendication 1, où le premier et le second ensembles de paramètres caractéristiques comprennent une performance de transmission minimale et une performance de transmission maximale et où :

- l'étape d'estimation comprend l'estimation d'une performance initiale minimale ($Q_{e1min}$, $Q_{e2min}$) et d'une performance initiale maximal ($Q_{e1max}$, $Q_{e2max}$)- des premier et second chemins optiques ($L_1$, $L_2$),
- l'étape de mesure comprend la mesure d'une performance réelle ($Q_{m1}$) du premier chemin optique ($L_1$),
- l'étape d'extrapolation comprend une détermination d'une nouvelle estimation de performance minimale ($Q'_{e2min}$) et d'une nouvelle estimation de performance maximale ($Q'_{e2max}$), selon les formules :

$$Q'_{e2min} = Q_{m1} + \Delta_{min}', \quad \Delta_{min}' = F(\Delta_{min})$$

$$Q'_{e2max} = Q_{m1} + \Delta_{max}', \quad \Delta_{max}' = F(\Delta_{max})$$

$$\Delta_{min} = \min (Q_{e2min} - Q_{e1min}; \ Q_{e2max} - Q_{e1max})$$

$$\Delta_{max} = \max (Q_{e2min} - Q_{e1min}; \ Q_{e2max} - Q_{e1max})$$

avec

$Q_{e1min}$: estimation initiale minimale de performance du premier chemin optique,
$Q_{e1max}$: estimation initiale maximale de performance du premier chemin optique,
$Q_{e2min}$: estimation initiale minimale de performance du second chemin optique,
$Q_{e2max}$: estimation initiale maximale de performance du second chemin optique,
$Q'_{e2min}$: nouvelle estimation de performance minimale du second chemin optique,
$Q'_{e2max}$: nouvelle estimation de performance maximale du second chemin optique,
$Q_{m1}$: mesure de performance du premier chemin optique, $F(\Delta)$: fonction de la variable $\Delta$.

5.  Procédé selon la revendication 4, où l'étape d'extrapolation comprend encore une détermination d'une nouvelle estimation de performance ($Q'_{e2}$), selon les formules

$$Q'_{e2} = Q'_{e2min} + (Q_{m1} - Q_{e1min}) * (Q'_{e2max} - Q'_{e2min}) / (Q_{e1max} - Q_{e1min}) - alpha(x)$$

avec

$Q_{e1min}$: estimation initiale minimale de performance du premier chemin optique,
$Q_{e1max}$: estimation initiale maximale de performance du premier chemin optique,
$Q'_{e2min}$: nouvelle estimation minimale de performance du second chemin optique,
$Q'_{e2max}$: nouvelle estimation maximale de performance du second chemin optique,
$Q'_{e2}$: nouvelle estimation de performance du second chemin optique,
$Q_{m1}$: mesure de performance du premier chemin optique, alpha fonction de la variable x,
x variable représentant la surlongueur du second chemin optique ($L_2$) par rapport au premier chemin optique ($L_1$), et/ou le nombre de span du ou des liens additionnels, et/ou le rapport phase non linéaire à signal à bruit optique, pNL/OSNR, du ou des liens additionnels.

6.  Procédé selon la revendication 2 ou 4, où la fonction $F(\Delta)$ est la fonction identité relativement à la variable $\Delta$.

7.  Procédé selon. la revendication 2 ou 4, où la fonction $F(\Delta, x)$ est encore fonction de la ou des variables x, x étant la surlongueur du second chemin optique ($L_2$) par rapport au premier chemin optique ($L_1$), et/ou x étant le nombre de span du ou des liens additionnels, et/ou x étant le rapport phase non linéaire à signal à bruit optique, pNL/OSNR, du ou des liens additionnels.

8.  Procédé selon la revendication 7, où la fonction $F(\Delta, x)$ est une fonction croissante de la variable x.

9.  Procédé selon la revendication 8, où la fonction $F(\Delta, x)$ est la fonction identité relativement à la variable x.

10. Procédé selon la revendication 8, où la fonction $F(\Delta, x)$ est une fonction linéaire de la variable x.

11. Procédé selon la revendication 8, où la fonction $F(\Delta, x)$ est une fonction quadratique de la variable x.

12. Procédé selon la revendication 3 ou 5, où la fonction alpha(x) est une fonction croissante de la variable x.

13. Procédé selon la revendication 12, où la fonction alpha(x) est la fonction nulle.

**Patentansprüche**

1. Verfahren zur Ermittlung der Übertragungsleistung eines optischen Pfades in einem Telekommunikationsnetzwerk, die folgenden Schritte umfassend:

    - Anfängliches Schätzen eines ersten Satzes von Parametern, welcher mindestens einen für die Übertragungsleistung für einen ersten optischen Pfad ($L_1$) und für einen zweiten optischen Pfad ($L_2$) kennzeichnenden Parameter umfasst, wobei der zweite optische Pfad ($L_2$) den ersten optischen Pfad ($L_1$) enthält,
    - Istwertmessung eines für die Übertragungsleistung des ersten optischen Pfades ($L_1$) kennzeichnenden Parameters,

    **dadurch gekennzeichnet, dass** es weiterhin den folgenden Schritt umfasst:

    - Extrapolieren, auf dem zweiten optischen Pfad ($L_2$), unter Ermitteln einer neuen Schätzung eines zweiten Satzes von Parametern, welcher mindestens einen für die Übertragungsleistung für den zweiten optischen Pfad ($L_2$) kennzeichnenden Parameter umfasst, in Abhängigkeit von der anfänglichen Schätzung und der Istwertmessung.

2. Verfahren nach Anspruch 1, wobei der erste und der zweite Satz von kennzeichnenden Parametern eine Übertragungsleistung umfasst, und wobei

    - der erste Schritt das Schätzen einer anfänglichen Leistung ($Q_{e1}$, $Q_{e2}$) des ersten und des zweiten optischen Pfades ($L_1$, $L_2$) umfasst,
    - der Schritt des Messens das Messen einer aktuellen Leistung ($Q_{m1}$) des ersten optischen Pfades ($L_1$) umfasst,
    - der Schritt des Extrapolierens eine Ermittlung einer neuen Schätzung der Leistung ($Q'_{e2}$) gemäß den folgenden Formeln umfasst:

    $$Q'_{e2} = Q_{m1} + \Delta' \text{ und } \Delta' = F(\Delta) \text{ und } \Delta = Q_{e2} - Q_{e1},$$

    wobei

    $Q'_{e2}$: neue Schätzung der Leistung des zweiten optischen Pfades,
    $Q_{e1}$: anfängliche Schätzung der Leistung des ersten optischen Pfades,
    $Q_{e2}$: anfängliche Schätzung der Leistung des zweiten optischen Pfades,
    $Q_{m1}$: Leistungsmaß des ersten optischen Pfades,
    $F(\Delta)$: Funktion der Variablen $\Delta$.

3. Verfahren nach Anspruch 1, wobei der erste Satz von kennzeichnenden Parametern eine minimale Übertragungsleistung und eine maximale Übertragungsleistung umfasst, wobei der zweite Satz von kennzeichnenden Parametern eine Übertragungsleistung umfasst, und wobei

    - der Schritt des Schätzens das Schätzen einer minimalen anfänglichen Leistung ($Q_{e1min}$, $Q_{e2min}$) und einer maximalen anfänglichen Leistung ($Q_{e1max}$, $Q_{e2max}$) des ersten und des zweiten optischen Pfades ($L_1$, $L_2$) umfasst,
    - der Schritt des Messens das Messen einer aktuellen Leistung ($Q_{m1}$) des ersten optischen Pfades ($L_1$) umfasst,
    - der Schritt des Extrapolierens eine Ermittlung einer neuen Schätzung der Leistung ($Q'_{e2}$) gemäß den folgenden Formeln umfasst:

    $$Q'_{e2} = Q_{e2min} + (Q_{m1} - Q_{e1min}) * (Q_{e2max} - Q_{e2min}) / (Q_{e1max} - Q_{e1min}) - alpha(x),$$

    wobei

    $Q_{e1min}$: minimale anfängliche Schätzung der Leistung des ersten optischen Pfades, $Q_{e1max}$: maximale anfängliche Schätzung der Leistung des ersten optischen Pfades, $Q_{e2min}$: minimale anfängliche Schätzung

der Leistung des zweiten optischen Pfades, $Q_{e2max}$: maximale anfängliche Schätzung der Leistung des zweiten optischen Pfades, $Q'_{e2}$: neue Schätzung der Leistung des zweiten optischen Pfades, $Q_{m1}$: Leistungsmaß des ersten optischen Pfades, alpha: Funktion der Variablen x,

x: Variable, welche die Überlänge des zweiten optischen Pfades ($L_2$) bezüglich des ersten optischen Pfades ($L_1$), und/oder die Anzahl von Spans der zusätzlichen Verbindung(en), und/oder das nichtlineare Phaseoptisches Signal-Rausch-Verhältnis, pNL/OSNR, der zusätzlichen Verbindung(en) darstellt.

4. Verfahren nach Anspruch 1, wobei der erste Satz und der zweite Satz von kennzeichnenden Parametern eine minimale Übertragungsleistung und eine maximale Übertragungsleistung umfasst, und wobei

- der Schritt des Schätzens das Schätzen einer minimalen anfänglichen Leistung ($Q_{e1min}$, $Q_{e2min}$) und einer maximalen anfänglichen Leistung ($Q_{e1max}$, $Q_{e2max}$) des ersten und des zweiten optischen Pfades ($L_1$, $L_2$) umfasst,
- der Schritt des Messens das Messen einer aktuellen Leistung ($Q_{m1}$) des ersten optischen Pfades ($L_1$) umfasst,
- der Schritt des Extrapolierens eine Ermittlung einer neuen Schätzung der minimalen Leistung ($Q'_{e2min}$) und einer neuen Schätzung der maximalen Leistung ($Q'_{e2max}$) gemäß den folgenden Formeln umfasst:

$$Q'_{e2min} = Q_{m1} + \Delta_{min}', \quad \Delta_{min}' = F(\Delta_{min})$$

$$Q'_{e2max} = Q_{m1} + \Delta_{max}', \quad \Delta_{max}' = F(\Delta_{max})$$

$$\Delta_{min} = min(Q_{e2min} - Q_{e1min}; Q_{e2max} - Q_{e1max})$$

$$\Delta_{max} = max(Q_{e2min} - Q_{e1min}; Q_{e2max} - Q_{e1max})$$

wobei

$Q_{e1min}$: minimale anfängliche Schätzung der Leistung des ersten optischen Pfades,
$Q_{e1max}$: maximale anfängliche Schätzung der Leistung des ersten optischen Pfades,
$Q_{e2min}$: minimale anfängliche Schätzung der Leistung des zweiten optischen Pfades,
$Q_{e2max}$: maximale anfängliche Schätzung der Leistung des zweiten optischen Pfades,
$Q'_{e2min}$: neue Schätzung der minimalen Leistung des zweiten optischen Pfades,
$Q'_{e2max}$: neue Schätzung der maximalen Leistung des zweiten optischen Pfades,
$Q_{m1}$: Leistungsmaß des ersten optischen Pfades,
$F(\Delta)$: Funktion der Variablen $\Delta$.

5. Verfahren nach Anspruch 4, wobei der Schritt des Extrapolierens weiterhin eine Ermittlung einer neuen Schätzung der Leistung ($Q'_{e2}$) gemäß den folgenden Formeln umfasst:

$$Q'_{e2} = Q'_{e2min} + (Q_{m1} - Q_{e1min}) * (Q'_{e2max} - Q'_{e2min}) / (Q_{e1max} - Q_{e1min}) - alpha(x),$$

wobei

$Q_{e1min}$: minimale anfängliche Schätzung der Leistung des ersten optischen Pfades,
$Q_{e1max}$: maximale anfängliche Schätzung der Leistung des ersten optischen Pfades,
$Q'_{e2min}$: neue minimale Schätzung der Leistung des zweiten optischen Pfades,
$Q'_{e2max}$ neue maximale Schätzung der Leistung des zweiten optischen Pfades,
$Q'_{e2}$: neue Schätzung der Leistung des zweiten optischen Pfades,
$Q_{m1}$: Leistungsmaß des ersten optischen Pfades,
alpha: Funktion der Variablen x,

x: Variable, welche die Überlänge des zweiten optischen Pfades ($L_2$) bezüglich des ersten optischen Pfades ($L_1$), und/oder die Anzahl von Spans der zusätzlichen Verbindung(en), und/oder das nichtlineare Phase-optisches Signal-Rausch-Verhältnis, pNL/OSNR. der zusätzlichen Verbindung(en) darstellt.

6. Verfahren nach Anspruch 2 oder 4, wobei die Funktion F ($\Delta$) die Identitätsfunktion bezüglich der Variablen $\Delta$ ist.

7. Verfahren nach Anspruch 2 oder 4, wobei die Funktion F ($\Delta$, x) weiterhin eine Funktion der Variablen x ist, wobei x die Überlänge des zweiten optischen Pfades ($L_2$) bezüglich des ersten optischen Pfades ($L_1$) ist, und/oder x die Anzahl von Spans der zusätzlichen Verbindung(en) ist, und/oder x das das nichtlineare Phase-optisches Signal-Rausch-Verhältnis, pNL/OSNR, der zusätzlichen Verbindung(en) ist.

8. Verfahren nach Anspruch 7, wobei die Funktion F ($\Delta$, x) eine steigende Funktion der Variablen x ist.

9. Verfahren nach Anspruch 8, wobei die Funktion F ($\Delta$, x) die Identitätsfunktion bezüglich der Variablen x ist.

10. Verfahren nach Anspruch 8, wobei die Funktion F ($\Delta$; x) eine lineare Funktion der Variablen x ist.

11. Verfahren nach Anspruch 8, wobei die Funktion F ($\Delta$, x) eine quadratische Funktion der Variablen x ist.

12. Verfahren nach Anspruch 3 oder 5, wobei die Funktion alpha (x) eine steigende Funktion der Variablen x ist.

13. Verfahren nach Anspruch 12, wobei die Funktion alpha (x) eine Nullfunktion x ist.

**Claims**

1. A method for determining the transmission performance of an optical path in a telecommunication network comprising the following steps:

   - making an initial estimate of a first set of parameters comprising at least one parameter characteristic of the transmission performance for a first optical path ($L_1$) and for a second optical path ($L_2$), the second optical path ($L_2$) containing the first optical path ($L_1$),
   - taking an actual measurement of a parameter characteristic of the transmission performance of the first optical path ($L_1$), **characterized in that** it further comprises a step of:
   - extrapolating to the second optical path ($L_2$), by determining a new estimate of a second set of parameters comprising at least one parameter characteristic of the transmission performance for the second optical path ($L_2$), based on the initial estimate and the actual measurement.

2. A method according to claim 1, in which the first and second sets of characteristic parameters comprise a transmission performance and in which

   - the step of making an estimate comprises the estimating of an initial performance ($Q_{e1}$, $Q_{e2}$) of the first and second optical paths ($L_1$, $L_2$),
   - the step of taking a measurement comprises the measuring of an actual performance ($Q_{m1}$) of the first optical path ($L_1$),
   - the step of extrapolating comprises a determining of a new performance estimate ($Q'_{e2}$), based on the formulas:

$$Q'_{e2} = Q_{m1} + \Delta' \text{ and } \Delta' = F (\Delta) \text{ and } \Delta = Q_{e2} - Q_{e1},$$

   where

   $Q'_{e2}$: new performance estimate of the second optical path,
   $Q_{e1}$: initial performance estimate of the first optical path,
   $Q_{e2}$: initial performance estimate of the second optical path,
   $Q_{m1}$: performance measurement of the first optical path,
   $F(\Delta)$: function of the variable $\Delta$.

3. A method according to claim 1 , in which the first set of characteristic parameters comprises a minimum transmission performance and a maximum transmission performance, the second set of characteristic parameters comprises a transmission performance, and in which

- the step of making an estimate comprises the estimating of a minimum initial performance ($Q_{e1min}$, $Q_{e2min}$) and a maximum initial performance ($Q_{e1max}$, $Q_{e2max}$) of the first and second optical paths ($L_1$, $L_2$),
- the step of taking a measurement comprises the measuring of an actual performance ($Q_{m1}$) of the first optical path ($L_1$),
- the step of extrapolating comprises a determining of a new performance estimate ($Q'_{e2}$), based on the formulas:

$$Q'_{e2} = Q_{e2min} + (Q_{m1} - Q_{e1min}) * (Q_{e2max} - Q_{e2min}) / (Q_{e1max} - Q_{e1min}) - alpha\ (x)$$

where

$Q_{e1min}$: minimum initial performance estimate of the first optical path,
$Q_{e1max}$: maximum initiale performance estimate of the first optical path,
$Q_{e2min}$: minimum initial performance estimate of the second optical path,
$Q_{e2max}$: maximum initial performance estimate of the second optical path,
$Q'_{e2}$: new performance estimate of the second optical path,
$Q_{m1}$: performance measurement of the first optical path,
alpha: function of the variable x,
x: variable representing the length by which the second optical path ($L_2$) exceeds the first optical path ($L_1$), and/or the number of spans of the one or more additional links, and/or the nonlinear phase over optical signal-to-noise ratio, pNL/OSNR, of the one or more additional links.

4. A method according to claim 1, in which the first and second sets of characteristic parameters comprise a minimum transmission performance and a maximum transmission performance and in which:

- the step of making an estimate comprises the estimating of a minimum initial performance ($Q_{e1min}$, $Q_{e2min}$) and a maximum initial performance ($Q_{e1max}$, $Q_{e2max}$) of the first and second optical paths ($L_1$, $L_2$),
- the step of taking a measurement comprises the measuring of an actual performance ($Q_{m1}$) of the first optical path ($L_1$),
- the step of extrapolating comprises a determining of a new minimum performance estimate ($Q'_{e2min}$) and a new maximum performance estimate ($Q'_{e2max}$), based on the formulas:

$$Q'_{e2min} = Q_{m1} + \Delta_{min}',\ \Delta_{min}', = F(\Delta_{min})$$

$$Q'_{e2max} = Q_{m1} + \Delta_{max}',\ \Delta_{max}', = F(\Delta_{max})$$

$$\Delta_{min} = min\ (Q_{e2min} - Q_{e1min};\ Q_{e2max} - Q_{e1max})$$

$$\Delta_{max} = max\ (Q_{e2min} - Q_{e1min};\ Q_{e2max} - Q_{e1max})$$

where

$Q_{e1min}$: minimum initial performance estimate of the first optical path,
$Q_{e1max}$: maximum initial performance estimate of the first optical path,
$Q_{e2min}$: minimum initial performance estimate of the second optical path,
$Q_{e2max}$: maximum initial performance estimate of the second optical path,

$Q'_{e2min}$: new minimum performance estimate of the second optical path,
$Q'_{e2max}$: new maximum performance estimate of the second optical path,
$Q_{m1}$: performance measurement of the first optical path,
$F(\Delta)$: function of the variable $\Delta$.

5. A method according to claim 4, in which the step of extrapolating further comprises a determining of a new performance estimate ($Q'_{e2}$), based on the formulas

$$Q'_{e2} = Q'_{e2min} + (Q_{m1} - Q_{e1min}) * (Q'_{e2max} - Q'_{e2min}) / (Q_{e1max} - Q_{e1min}) - alpha\ (x)$$

where

$Q_{e1min}$: minimum initial performance estimate of the first optical path,
$Q_{e1max}$: maximum initial performance estimate of the first optical path,
$Q'_{e2min}$: new minimum performance estimate of the second optical path,
$Q'_{e2max}$: new maximum performance estimate of the second optical path,
$Q'_{e2}$: new performance estimate of the second optical path,
$Q_{m1}$: performance measurement of the first optical path,
alpha: function of the variable x,
x: variable representing the length by which the second optical path ($L_2$) exceeds the first optical path ($L_1$), and/or the number of spans of the one or more additional links, and/or the nonlinear phase over optical signal-to-noise ratio, pNL/OSNR, of the one or more additional links.

6. A method according to claim 2 or 4, in which the function $F(\Delta)$ is the identity function in relation to the variable $\Delta$.

7. A method according to claim 2 or 4, in which the function $F(\Delta, x)$ is further a function of the variable or variables x, x being the length by which the second optical path ($L_2$) exceeds the first optical path ($L_1$), and/or x being the number of spans of the one or more additional links, and/or x being the nonlinear phase over optical signal-to-noise ratio, pNL/OSNR, of the one or more additional links.

8. A method according to claim 7, in which the function $F(\Delta, x)$ is an increasing function of the variable x.

9. A method according to claim 8, in which the function $F(\Delta, x)$ is a quadratic function of the variable x.

10. A method according to claim 8, in which the function $F(\Delta, x)$ is a linear function of the variable x.

11. A method according to claim 8, in which the function $F(\Delta, x)$ is a quadratic function of the variable x.

12. A method according to claim 3 or 5, in which the function alpha(x) is an increasing function of the variable x.

13. A method according to claim 12, in which the function alpha(x) is the null function.

FIG. 1

FIG. 2

FIG. 3

FIG. 4

EP 2 079 179 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2864386